# EUROPEAN PATENT SPECIFICATION

(11) **EP 3 302 779 B1**
(45) Date of publication and mention of the grant of the patent: **30.09.2020**
(21) Application number: 16725115.6
(22) Date of filing: 24.05.2016
(51) Int. Cl.: B01J 2/30, C08J 3/12, C08L 27/12

(54) **ANTI-STICKING TREATMENT FOR LOW CRISTALLINITY FLUOROPOLYMER PARTICLES**
HAFTSCHUTZBEHANDLUNG FÜR FLUORPOLYMERPARTIKEL MIT GERINGER KRISTALLINITÄT
TRAITEMENT ANTI-ADHESIF POUR PARTICULES DE FLUOROPOLYMERE A FAIBLE CRISTALLINITE

(30) Priority: 27.05.2015 EP 15169393
(43) Date of publication of application: 11.04.2018
(73) Proprietor: Solvay Specialty Polymers Italy S.p.A., 20021 Bollate (MI) (IT)
(72) Inventor: MERLO, Luca, 22030 Montorfano (CO) (IT); CORASANITI, Martina, 21042 Caronno Pertusella (VA) (IT); DEL GAUDIO, Michele, 20833 Giussano (MB) (IT)
(74) Representative: Benvenuti, Federica
(86) International application number: PCT/EP2016/061695
(87) International publication number: WO 2016/189000

(56) References cited:
- EP-B1- 2 170 979
- US-A- 4 720 397
- US-A- 4 746 573
- US-A1- 2014 213 730

## Description

### Technical Field

The invention relates to an anti-sticking treatment for particles of fluoropolymers having low crystallinity.

### Background Art

Heat-meltable fluoropolymers are commonly processed by melt extrusion starting from polymer pellets. However, this may prove difficult for certain classes of fluoropolymers, due to their low crystallinity and low glass transition temperature. Non-limiting examples of such materials are in general all the thermoplastic elastomers (TPE), the fluorinated ionomers in SO₂F form, the perfluoroalkoxy polymers (PFAs), the copolymers of tetra-fluoroethylene (TFE) and 2,2,4-trifluoro-5-trifluoromethoxy-1,3-dioxole and the copolymers of VDF-CTFE.

Because of their low degree of crystallinity, these polymers have low melting and softening points, which causes difficulties in their preparation and in their processing. The drying process of these materials, which is intended to remove water/volatiles from pellets before extrusion, shall have to be carried out at low temperature, to avoid sticking of the pellets, and volatile contaminants are not removed effectively unless high temperatures are applied.

Storing the pellets of such materials at room temperature (20-30°C) is not possible since the pellets stick to each other and form agglomerates, which and are very difficult to process using standard techniques. This can be partially solved by storing the pellets at low temperature, which involves the obvious drawback of high costs linked to temperature control.

During pellets extrusion, the melt flow is influenced by the tendency of the pellets to aggregate before melting, so the extrusion of sticking pellets often results in uneven melt flow of the extruded part.

US 2014/0213730 A (SOLVAY SPECIALTY POLYMERS ITALY S.P.A.) 31.07.2014 discloses compositions comprising a fluoroelastomer and VDF homopolymers or copolymers, in amount higher than 5% in weight relative to the total weight of the fluoroelastomer and of the polymer, that are prepared by cryogenic milling a mixture of the elastomer in a solid form and of a powder of the VDF polymer, thus obtaining a homogeneous blend of the two polymers. Temperatures from -20 to -50 are indicated as suitable for the milling step.

Anti-sticking additives can be added to prevent aggregation, however these substances modify the final product. High-melting solids can also be used, however their compatibility with the polymeric matrix is generally poor.

Notably, the above-mentioned substances tend to increase the affinity of the material for water and may lead to the formation of defects and quality issues in extrusion, due to possible increased moisture absorption, increased volatiles release or incompatibility of additives with the matrix.

US 4,720,397 (GENERAL TECHNOLOGY APPLICATIONS, INC.) 19.01.1988 describes compositions comprising a central portion formed of a high molecular weight thermoplastic or viscoelastic polymer, such as a polyolefin or an elastomer, coated with a layer of an inorganic substance, such as tricalcium phosphate, obtained by cooling the polymer of the central portion at a temperature below its transition glass temperature (-10°C to -100°C), comminuting it by an impact-type mill at the same temperature and coating the so-obtained particles with the inorganic substance.

A simple and cost-effective method to prevent pellets comprising low crystallinity fluoropolymers from sticking and to improve their workability, especially by extrusion, is at present an unmet need.

### Summary of invention

The present invention solves the above problems by providing a solid composition in the form of a plurality of composite particles, wherein each composite particle comprises a core (A) that is at least partially coated with elementary particles (B) having weight average particle size (D50) at least 10 times smaller than the D50 of the core (A), wherein:
- the core (A) comprises a low crystallinity fluoropolymer (fluoropolymer (a)), having a heat of fusion not higher than 4 J/g, and
- the elementary particles (B) have a D50 from 1 to 1000 nm and comprise a high crystallinity fluoropolymer (fluoropolymer (b)), having a heat of fusion above 10 J/g,
said composition being characterised in that the weight ratio of fluoropolymer (a) to fluoropolymer (b) is from 96:4 to 99.99:0.01.

The present invention further provides a method for the preparation of a composition as described above, comprising the steps of:
i. preparing a plurality of particle cores (A) comprising fluoropolymer (a);
ii. contacting the particle cores (A) of step i. with a suspension or dispersion of elementary particles (B) having a weight average particle size (D50) from 1 to 1000 nm, comprising a high crystallinity fluoropolymer (b), in a liquid medium to obtain a biphasic system;
iii. removing the liquid medium from the biphasic system of step ii.

In another aspect, the present invention provides a process for the preparation of an article comprising a composition obtained via melt extrusion of the solid composition in the form of a plurality of particles as defined above, and an article obtainable via said process.

### Brief description of drawings

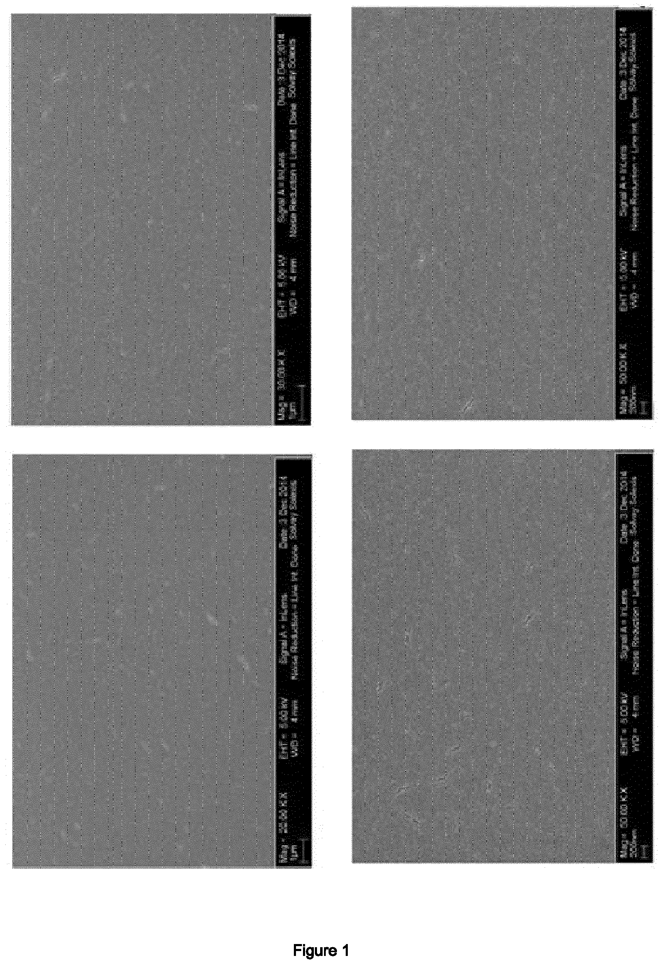

Figure 1: SEM images of uncoated pellets comprising a PFSA ionomer precursor, prior to the treatment according to the invention

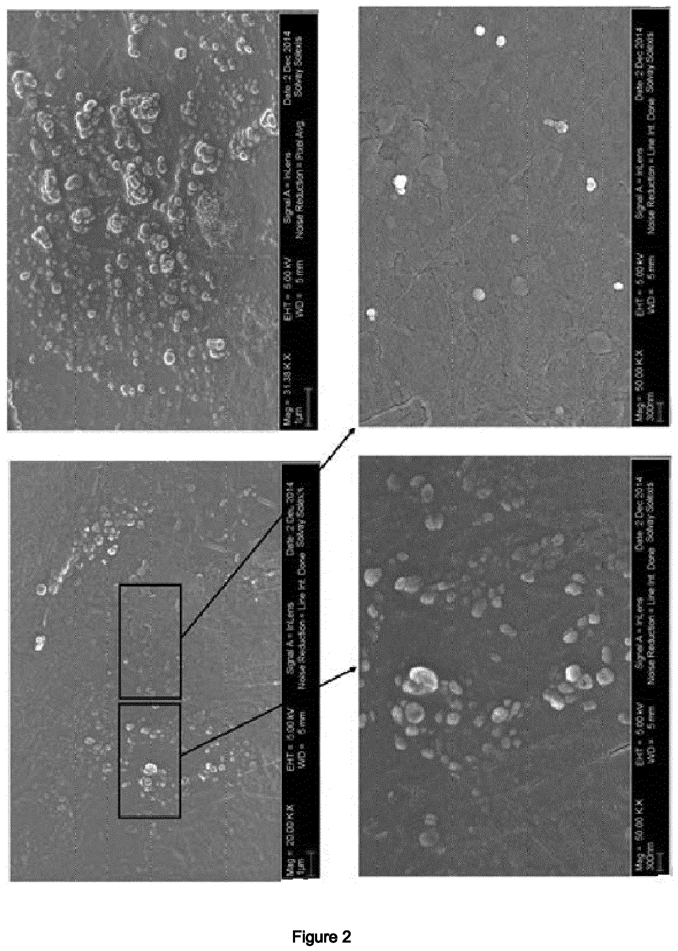

Figure 2: SEM images of partially coated pellets comprising a PFSA ionomer precursor, according to the invention.

### Description of embodiments

In the context of the present invention, the term "suspension", "emulsion" and "latex" indicates a stable mixture consisting essentially of a liquid medium, preferably water, and fluoropolymer solids, and optionally comprises a surfactant and/or other additives, an initiator (and/or decomposition products of the initiator) and residuals from reagents/catalysts deriving from the polymerization reaction. Generally, the latex, suspension or emulsion contains from about 1 to about 99 weight percent of fluoropolymer solids, preferably from 10 to 80 weight percent of fluoropolymer solids. The polymer in the latex is in the form of small particles having a weight average particle size range of from about 1 nm to about 1000 nm, preferably from 5 to 700 nm, preferably from 10 to 500 nm, more preferably from 100 to 200 nm as determined, for example, via photon correlation spectroscopy, such as via the method ISO13321:1996.

In the composition according to the invention, the cores (A) comprising the low crystallinity fluoropolymer (a) can be in any shape that is obtainable via the processes known to the person skilled in the art. As non-limitative examples, the cores (A) comprising the low crystallinity fluoropolymer (a) can be granules, pellets or a coarse powder (e.g. weight average particle size 50-500 micrometers).

The composite particle comprising a core (A), comprising fluoropolymer (a), at least partially coated with elementary particles (B), comprising fluoropolymer (b), preferably have a weight average particle size of at least 400 micrometers, or of at least 700 micrometers, typically of at least 1000 micrometers, more preferably at least 1200 micrometers or at least 1500 micrometers and below 5000 micrometers, more preferably below 3000 micrometers, as determined via the methods generally used and known to the person skilled in the art, such as sieve analysis (e.g. according to method ASTM D1921-12).

The calculation of the average particle size can be made according to the methods known to the person skilled in the art, e.g. via ISO 9276-5 (2004 and subsequent revisions).

As non-limitative examples, the shape of the composite particle can be such that the particles have an axial length of no more than about 5000 micrometers, a cross sectional shape having a rectangular envelope with an aspect ratio of at least about 1.5, more commonly about 2 to 30 and have an axial length/cross sectional width ratio (L:W) of about 0.25 to 30, more commonly 2 to 20 or 5 to 10.

Preferably, in the solid composition according to the invention the weight ratio of fluoropolymer (a) to fluoropolymer (b) is from 98:2 to 99.99:0.01, more preferably from 99:1 to 99.98: 0.02, from 99.2: 0.8 to 99.95:0.05 or 99.9: 0.1. In other words, the amount of fluoropolymer (b) is preferably from 2% to 0.01%, more preferably from 1% to 0.02%, from 0.8% and 0.05% or 0.1% by weight relative to the total weight of the sum of (a) and (b).

In the context of the present invention, "at least partially coated composite particles" indicates particles comprising a fluoropolymer, such as pellets, granules or coarse powder, having generally not more than 80% of the outer surface of their core (A), comprising fluoropolymer a, covered by smaller particles of a different fluoropolymer (fluoropolymer (b)). Preferably, less than 50%, more preferably less than 30% or than 10% of the outer surface of such cores (A) is covered by the elementary, i.e. smaller, particles (B) of a different fluoropolymer, as can be detected, for example, via SEM analysis. For the sake of clarity, the composite particles in the compositions of the invention have a "core-shell" structure and compositions obtained by simple blending of fluoropolymers of the type (a) and of fluoropolymers of the type (b) as described above are not part of the present invention.

In the context of the present invention, fluoropolymer (a) has low crystallinity than fluoropolymer (b), i.e. it exhibits a heat of fusion not exceeding 4 J/g, preferably not exceeding 3 J/g, more preferably not exceeding 2 J/g. The heat of fusion of fluoropolymer (a) can be determined by DSC following the procedure of ASTM D3418-08.

In the context of the present invention, fluoropolymer (b) has higher crystallinity, i.e. it exhibits a heat of fusion exceeding 10 J/g, preferably exceeding 20 J/g, more preferably exceeding 30 J/g. The heat of fusion of fluoropolymer (b) can be determined by DSC following the procedure of ASTM D3418-08. As specifically provided by this standard, the heat of fusion of polymers (a) and (b) is determined from second heating curve at a heat rate of 10°C/min, after having suppressed effects of thermal history of the sample in a first heating cycle and subsequent cooling in well-defined conditions.

In a preferred embodiment of the present invention, fluoropolymer (a) as defined above comprises recurring units derived from at least one ethylenically unsaturated fluorinated monomer [monomer (a1)] and at least one ethylenically unsaturated fluorinated monomer containing at least one -SO₂F group [monomer (a2)].

More preferably, in the composition according to the invention, fluoropolymer (a) comprises:
- recurring units derived from at least one ethylenically unsaturated monomer comprising at least one fluorine atom (fluorinated monomer (a1), hereinafter); and
- a substantial amount of recurring units derived from at least one ethylenically unsaturated monomer comprising at least one ion exchange group (functional monomer (a2), hereinafter)
wherein the fluoropolymer (a) comprises recurring units derived from at least one fluorinated functional monomer (a2) selected from the group consisting of CF₂=CF(CF₂)ₚSO₂F wherein p is an integer between 0 and 10, preferably between 1 and 6, more preferably p is equal to 2 or 3; CF₂ =CF-O-(CF₂)ₘSO₂F wherein m is an integer between 1 and 10, preferably between 1 and 6, more preferably between 2 and 4, even more preferably m equals 2; CF₂=CF-(OCF₂CF(R_{F1}))_{w}-O-CF₂(CF(R_{F2}))_{y}SO₂F wherein w is an integer between 0 and 2, R_{F1} and R_{F2}, equal or different from each other, are independently F, Cl or a C₁-C₁₀ fluoroalkyl group, optionally substituted with one or more ether oxygens, y is an integer between 0 and 6; preferably w is 1, R_{F1} is -CF₃, y is 1 and R_{F2} is F; CF₂=CF-Ar-SO₂F wherein Ar is a C₅-C₁₅ aromatic or heteroaromatic substituent.

Fluoropolymer (a) according to the above definition can be a precursor of perfluoro sulfonic acid (PFSA) ionomer, even more preferably, said monomer (a2) is CF₂=CF-O-(CF₂)ₘ-SO₂F, wherein m is an integer between 1 and 6, preferably between 2 and 4.

In a preferred embodiment, said monomer (a2) is CF₂=CFOCF₂CF₂-SO₂ F.

Preferably, said monomer (a1) is selected from the group comprising: C₂ -C₈ fluoroolefins, such as tetrafluoroethylene, pentafluoropropylene, hexafluoropropylene, and hexafluoroisobutylene; vinylidene fluoride; C₂-C ₈ chloro- and/or bromo- and/or iodo-fluoroolefins, such as chlorotrifluoroethylene and bromotrifluoroethylene; fluoroalkylvinylethers of formula CF₂=CFOR_{f1}, wherein R_{f1} is a C₁-C₆ fluoroalkyl, e.g. -CF₃, -C₂F₅, -C₃F₇; fluoro-oxyalkylvinylethers of formula CF₂=CFOR_{O1}, wherein R_{O1} is a C₁-C₁₂ fluoro-oxyalkyl having one or more ether groups, for example perfluoro-2-propoxy-propyl; fluoroalkyl-methoxy-vinylethers of formula CF₂ =CFOCF₂OR_{f2} in which R_{f2} is a C₁-C₆ fluoroalkyl, e.g. -CF₃, -C₂F₅, -C₃F₇ or a C₁-C₆ fluorooxyalkyl having one or more ether groups, like -C₂F₅ -O-CF₃; fluorodioxoles, of formula (I): 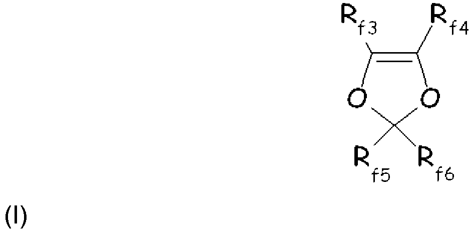 wherein each of R_{f3}, R_{f4}, R_{f5}, R_{f6}, equal to or different from each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂CF₂OCF₃.

More preferably, said monomer (a1) is selected from the group comprising:
C₃-C₈ fluoroolefins, preferably tetrafluoroethylene and/or hexafluoropropylene ;
chloro- and/or bromo- and/or iodo-C₂-C₆ fluoroolefins, like chlorotrifluoroethylene and/or bromotrifluoroethylene;
fluoroalkylvinylethers of formula CF₂=CFOR_{f1} in which R_{f1} is a C₁-C₆ fluoroalkyl, e.g. -CF₃, -C₂F₅, -C₃F₇;
fluoro-oxyalkylvinylethers of formula CF₂=CFOR_{O1}, in which R_{O1} is a C₁ -C₁₂ fluorooxyalkyl having one or more ether groups, like perfluoro-2-propoxy-propyl.

In a most preferred embodiment, said monomer (a1) is tetrafluoroethylene (TFE).

Optionally, in addition to monomers (a1) and (a2), fluoropolymer (a) may comprise recurring units derived from bis-olefins.

Non limiting examples of suitable bis-olefins are selected from those of formulae below:
- R₁R₂C=CH-(CF₂)ⱼ-CH=CR₃R₄ wherein j is an integer between 2 and 10, preferably between 4 and 8, and R₁, R₂, R₃, R₄, equal or different from each other, are -H, -F or C₁-C₅ alkyl or (per)fluoroalkyl group;
- A₂C=CB-O-E-O-CB=CA₂, wherein each of A, equal or different from each other, is independently selected from -F, -CI, and -H; each of B, equal or different from each other is independently selected from -F, -CI, -H and
- OR_{B}, wherein R_{B} is a branched or straight chain alkyl radical which can be partially, substantially or completely fluorinated or chlorinated; E is a divalent group having 2 to 10 carbon atoms, optionally fluorinated, which may be inserted with ether linkages; preferably E is a -(CF₂)_{z}- group, with z being an integer from 3 to 5; and
- R₆R₇C=CR₅-E-O-CB=CA₂, wherein E, A and B have the same meaning as above defined; R₅, R₆, R₇, equal or different from each other, are -H, -F or C₁-C₅ alkyl or fluoroalkyl group.

When a bis-olefin is employed in fluoropolymer (a) in the composition of the invention, the resulting polymer typically comprises from 0.01% to 5% by moles of units deriving from the bis-olefin with respect to the total amount of units in the polymer.

The equivalent weight (EW) (i.e. grams of fluoropolymer (a) per mole of functional groups) of fluoropolymer (a), in the case of functionalised polymers such as fluorinated ionomer precursors, is not particularly limited, preferably fluoropolymer (a) has an EW between 500 g/eq and 1400 g/eq.

The fluorinated ionomer suitable for use as fluoropolymer (a) in the composition of the invention may be conveniently obtained by any polymerization process known in the art. Suitable processes for the preparation of the sulfonyl fluoride polymers are for instance those described in EP 1323751 A (SOLVAY SOLEXIS SPA) and EP 1172382 A (SOLVAY SOLEXIS SPA).

In a preferred embodiment, fluoropolymer (a) as above defined in the composition of the present invention is an amorphous perfluoropolymer, i.e. an amorphous fully fluorinated polymer consisting essentially of recurring units derived from at least one perfluorinated monomer.

The expression "consisting essentially of recurring units derived from at least one perfluorinated monomer" is intended to indicate that minor amounts of recurring units (e.g. less than 5, 2 or 1% of the total recurring units in the polymer) derived from non-perfluorinated monomers are tolerated in the perfluoropolymer.

Preferably, said at least one fluorinated monomer is selected from the group comprising:
- C₃-C₈ perfluoroolefins, such as tetrafluoroethylene (TFE) and hexafluoropropene (HFP);
- CF₂=CFOR_{f} (per)fluoroalkylvinylethers (PAVE) wherein R_{f} is a C₁-C₆ perfluoroalkyl group, for example CF₃, C₂F₅, C₃F₇;
- chloro- and/or bromo- and/or iodo-C₂-C₆ fluoroolefins, such as chlorotrifluoroethylene (CTFE); and
- perfluorodioxoles.

More preferably, said fluoropolymer (a) comprises recurring units derived from C₃-C₈ perfluoroolefins and CF₂=CFOR_{f} (per)fluoroalkylvinylethers wherein R_{f} is a C₁-C₆ perfluoroalkyl group.

Even more preferably, said fluoropolymer (a) comprises recurring units derived from tetrafluoroethylene (TFE) and perfluoromethyl-vinyl-ether (MVE).

Preferably, said fluoropolymer (a) comprises cure sites comprising at least one iodine or bromine atom, more preferably at least one iodine atom. Said cure sites can be comprised as pending groups in recurring units of the perfluoropolymer or can be present as end chains in the same. Embodiments wherein fluoropolymer (a) comprises iodine atoms in its end chains are preferred.

In a preferred embodiment, fluoropolymer (a) in the composition of the invention comprises a copolymer comprising recurring units deriving from tetrafluoroethylene, from perfluoromethylvinyl ether and from one or more fluorinated dioxoles of formula (I): 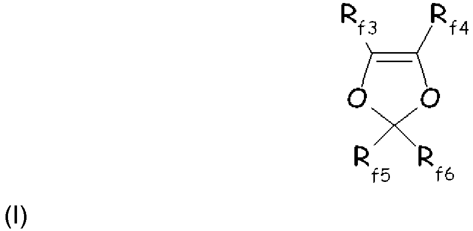 wherein each of R_{f3}, R_{f4}, R_{f5}, R_{f6}, equal to or different from each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂CF₂OCF₃. More preferably, the fluorinated dioxole of formula (I) is 2,2,4-trifluoro-5-trifluoromethoxy-1,3-dioxole (MDO).

In a more preferred embodiment, fluoropolymer (a) in the composition of the invention is a copolymer which comprises from 10 to 60%, more preferably from 20 to 40%, in weight/ total weight of a), of recurring units deriving from the fluorinated dioxole of formula (I), most preferably (MDO).

In a preferred embodiment, fluoropolymer (a) in the composition of the invention is a copolymer of vinylidene difluoride (VDF) and chlorotrifluoroethylene (CTFE) or a copolymer of VDF and trifluoroethylene (TrFE).

In a preferred embodiment, fluoropolymer (a) is a fluoropolymer different from a (per)fluoroelastomer according to the definition of ASTM, Special Technical Bulletin, No. 184, that is a substance that can be stretched at room temperature to at least twice its original length and, after having been held under stress for 5 minutes and the stress removed, returns to within 10% of their initial length in the same time.

Preferably, fluoropolymer (b) in the composition of the invention is selected from the group consisting of polytetrafluoroethylene (PTFE), a perfluoroalkoxy (PFA) polymer and a high crystallinity fluorinated ionomer bearing a -SO₂F group.

More preferably, fluoropolymer (b) is a perfluoroalkoxy (PFA) melt-processable copolymer comprising recurring units derived from at least one of perfluoromethylvinyl ether, perfluoropropyl vinyl ether and recurring units derived from tetrafluoroethylene (TFE).

More preferably, the fluoropolymer (b) is selected among TFE copolymers comprising recurring units derived from at least one per(halo)fluoromonomer (PFM) chosen among the group consisting of:
1. perfluoroalkylvinylethers complying with general formula CF₂=CFOR_{f1} in which R_{f1} is a C₁-C₆ perfluoroalkyl;
2. perfluoro-oxyalkylvinylethers complying with general formula CF₂ =CFOX₀₁, in which X₀₁ is a C₁-C₁₂ perfluorooxyalkyl having one or more ether groups;
3. C₃-C₈ perfluoroolefins; and
4. mixtures thereof.

According to a preferred embodiment of the invention, the polymer (b) is chosen among TFE copolymers comprising recurring units derived from and hexafluoropropylene (HFP) and optionally from at least one perfluoroalkylvinylether complying with general formula CF₂=CFOR_{f1'} in which R_{f1'} is a C₁-C₆ perfluoroalkyl.

Preferred polymers (b) according to this embodiment are selected among TFE copolymers comprising (preferably consisting essentially of) recurring units derived from tetrafluoroethylene (TFE) and hexafluoropropylene (HFP) in an amount ranging from 3 to 15 wt % and, optionally, from 0.5 to 3 wt % of at least one perfluoroalkylvinylether, as above defined.

Non-limiting examples of such polymers are TFE copolymers wherein the perfluoroalkylvinylether is perfluoromethylvinylether (PMVE, of formula CF ₂=CFOCF₃), perfluoroethylvinylether (PEVE, of formula CF₂=CFOC₂F₅), perfluoropropylvinylether (PPVE, of formula CF₂=CFOC₃F₇) and mixtures thereof.

In a preferred embodiment, the fluoropolymer (b) is advantageously a TFE copolymer consisting essentially of :
(a) from 3 to 13 %, preferably from 5 to 12 % by weight of recurring units derived from PMVE;
(b) from 0 to 6 % by weight of recurring units derived from one or more than one fluorinated comonomer different from PMVE and selected from the group consisting of perfluoroalkylvinylethers complying with general formula CF₂=CFOR_{f1'} in which R_{f1'} is a C₁-C₆ perfluoroalkyl and perfluoro-oxyalkylvinylethers complying with general formula CF₂=CFOX _{01'}, in which X_{01'} is a C₁-C₁₂ perfluorooxyalkyl having one or more ether groups; preferably derived from PEVE and/or PPVE;
(c) recurring units derived from tetrafluoroethylene, in such an amount that the sum of the percentages of the recurring units (a), (b) and (c) is equal to 100 % by weight.

In another preferred embodiment, the fluoropolymer (b) is advantageously a TFE copolymer consisting essentially of:
(a) from 0 to 6 % by weight of recurring units derived from PMVE;
(b) from 0.4 to 5 % by weight of recurring units derived from one or more than one fluorinated PAVE comonomer different from PMVE, preferably derived from PEVE and/or PPVE;
(c) from 0 to 6 % by weight of recurring units derived from at least one C₃ -C₈ perfluoroolefin, preferably derived from hexafluoropropylene (HFP); and
(d) recurring units derived from TFE, in such an amount that the sum of the percentages of the recurring units (a), (b), (c) and (d) is equal to 100 % by weight.

In an aspect, the present invention provides a method for the preparation of a composition as defined above, comprising the steps of:
i. preparing a plurality of particle cores (A) comprising fluoropolymer (a);
ii. contacting the particle cores (A) of step i. with a suspension or dispersion of elementary particles (B) having a weight average particle size (D50) from 1 to 1000 nm, comprising a high crystallinity fluoropolymer (b), in a liquid medium to obtain a biphasic system; and
iii. removing the liquid medium from the biphasic system of step ii.

Preferably, in step ii of the process according to the invention the liquid medium is an aqueous medium, more preferably said liquid medium consists of water or comprises not less than 80% of water. Advantageously, the solid composition in the form of a plurality of partially coated particles according to the invention can be prepared using an aqueous latex comprising fluoropolymers particles having a weight average particle size (D50) from 1 to 1000 nm, such as those normally obtained after polymerization of the fluoropolymer by emulsion techniques.

Preferably, in step iii. of the process according to the present invention the liquid medium is removed by drying at a temperature higher than 30°C, for example 80°C, 50°C or 40°C, optionally at reduced pressure, i.e. below 1000 mbar, for example at 400, 100 or below 20 mbar.

In an aspect, the present invention provides a process for the preparation of an article comprising a composition obtained via melt-extrusion of the solid composition as defined above in the form of a plurality of composite particles.

Advantageously, the composite particles (e.g. pellets) of the composition as above described are free-flowing and can be sorted by an optical sorter and/or fed to the apparatus used in the extrusion process (such as standard ram, single-screw or twin-screw extruder) in a continuous and even manner. Additional operations to disaggregate the agglomerates which may have formed during storage are not required in the process according to the present invention, hence processing is easier and the possibilities of product contaminations are reduced.

In addition, starting from the partially coated (composite) particles as described above instead of non-coated pellets, the extrusion process is more even and the article thus obtained has excellent appearance and mechanical properties.

In an aspect, the present invention provides an article obtainable via the process as defined above. It was found that extrusion of the composition in the form of partially coated particles as described above results in melt flow of the extruded part that is more uniform than that observed during extrusion starting from non-treated pellets.

Notably, extrusion of the particles according to the invention ultimately yields uniform articles without the need to use anti-sticking (also called "dusting") agents normally used, which may modify the properties of the final material, i.e. increasing the affinity of the material for water. Such agents include stearates, e.g. calcium stearate.

Preferably, no such dusting agents are added to the solid compositions according to the invention,

Preferably, the article obtained by the process as defined above is in the form of a film or a tube, i.e. a pipe.

The following example is provided to illustrate a form of the invention, with no intention to limit its scope.

### EXPERIMENTAL PART

### Pellets treatment procedure:

### Starting materials:

(A1): Pellets of a precursor of PFSA ionomer (= SO₂F form) as defined above (EW = 650, heat of fusion 1.5 J/g), average particle size = 2000 micrometers : 2 kg.
(B1) Latex of MFA (a copolymer of polytetrafluoroethylene and perfluoro methylvinylether), heat of fusion = 20 J/g in water containing 38% in weight of solid.

### Procedure:

A dispersion of MFA latex (B1, 5.5 g) in 5 liters of demineralized water is prepared in a container and mechanically stirred.

The PFSA precursor pellets (A1, 2 kg) are added portionwise (20-25 equal portions) to the latex dispersion at 25°C and the suspension thus obtained is stirred for 30 min at the same temperature.

The pellets are recovered with a strainer, the liquid phase is disposed of and the pellets are washed with demineralized water.

The pellets thus obtained are initially dried at 40°C for 48 h in an oven under a light stream of nitrogen or air, then it is dried under vacuum at 50°C for about 5 days.

At the end of the drying, the treated pellets are packed in a double polyethylene bag, optionally containing sachets of desiccant material (e.g. silica gel), similarly to the standard (untreated) ionomer pellets.

Pellets characterization:
After the oven drying, the standard pellets of a precursor of a PFSA ionomer adhere to each other and must be treated by hand in order to be separated. The pellets according to the invention are free flowing after the drying at 50°C, and also after drying at 80°C .

The water content of the pellets is measured after the drying, using standard techniques, and, both in case of standard (without anti-sticking agent) and of treated pellets the measured value is below 100 ppm of water. The speed of water uptake is also measured (at 23°C, 50% humidity), both the standard pellets (without antisticking additives) and the pellets according to the invention maintain a water level below 200 ppm after several days of exposure.

The pellets were packed into polyethylene bags containing desiccant material, the bags are closed under vacuum and stored at ambient temperature. After three weeks the bags were opened and it was observed that the standard pellets formed a unique aggregate that can be disaggregated by shaking in a steel container (causing the fragmentation of some of the pellets), while the treated pellets according to the invention maintain the free-flowing disaggregated behaviour.

From SEM analysis (standard and treated) are available, the surface of the pellet according to the invention is partially covered by fluoropolymer nanoparticles.

Extrusion trials showed that the quality of the obtained film (surface appearance, polymer performance) is equivalent or superior to that obtained via standard pellets, i.e. the surface treatment is not detrimental to the properties of the extruded articles. Notably, compared to a film obtained starting from standard pellets, the film obtained according to the invention is free of visual defects caused by aggregation of the particles and by the presence of inorganic materials and by the volatilization of anti-stick agents.

## Claims

1. A solid composition in the form of a plurality of composite particles, wherein each composite particle comprises a core (A) that is at least partially coated with elementary particles (B) having weight average particle size (D50) at least 10 times smaller than the D50 of the core (A), wherein:
- the core (A) comprises a low crystallinity fluoropolymer (fluoropolymer (a)), having a heat of fusion not higher than 4 J/g, and
- the elementary particles (B) have a D50 from 1 to 1000 nm as determined via photon correlation spectroscopy using the method ISO 13321:1996, and comprise a
high crystallinity fluoropolymer (fluoropolymer (b)), having a heat of fusion above 10 J/g,
said heat of fusion values being determined by DSC following the procedure of ASTM D3418-08,
said composition being **characterised in that** the weight ratio of fluoropolymer (a) to fluoropolymer (b) is from 96:4 to 99.99:0.01.

2. The solid composition according to claim 1, wherein the weight ratio of fluoropolymer (a) to fluoropolymer (b) is from 98:2 to 99.99:0.01, preferably from 99:1 to 99.98: 0.02, most preferably from 99.2: 0.8 to 99.95:0.05.

3. The solid composition according to claim 1 or 2, wherein the average size of the composite particle comprising a core (A) partially coated with elementary particles (B) determined by sieve analysis according to method ASTM D1921-12 is at least 400 micrometers, preferably 700 micrometers, more preferably at least 1000 micrometers, at least 1200 µm or at least 1500 µ m and/or not more than 5000 micrometers, more preferably not more than 3000 micrometers.

4. The solid composition according to any of the preceding claims, wherein the elementary particles (B) comprising fluoropolymer (b) have weight average size (D50) from 1 to 700 nm, preferably from 10 to 500 nm, more preferably from 100 to 200 nm.

5. The solid composition according to any of the preceding claims, wherein fluoropolymer (a) is selected from the group consisting of: a fluorinated ionomer in the SO₂F form, a copolymer comprising recurring units deriving from tetrafluoroethylene, from perfluoromethylvinyl ether and from one or more fluorinated dioxoles of formula (I): 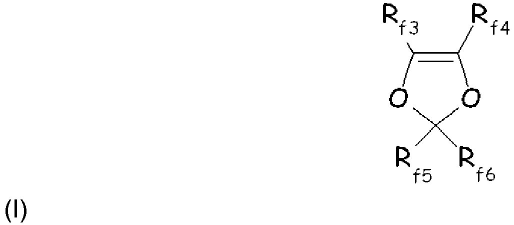 wherein each of R_{f3}, R_{f4}, R_{f5}, R_{f6}, equal to or different from each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂CF₂OCF₃, a copolymer of vinylidene difluoride (VDF) and chlorotrifluoroethylene (CTFE), or copolymers of VDF and trifluoroethylene (TFE), and mixtures thereof.

6. The solid composition according to claim 5, wherein fluoropolymer (a) is selected from the group consisting of: a fluorinated ionomer precursor in the SO₂F form comprising
- recurring units derived from at least one ethylenically unsaturated monomer comprising at least one fluorine atom (fluorinated monomer (a1); and
- a substantial amount of recurring units derived from at least one ethylenically unsaturated monomer comprising at least one ion exchange group (functional monomer (a2), hereinafter), wherein:
i. the at least one fluorinated functional monomer (a2) is selected from the group consisting of
- CF₂=CF(CF₂)ₚSO₂F wherein p is an integer between 0 and 10, preferably between 1 and 6, more preferably p is equal to 2 or 3;
- CF₂=CF-O-(CF₂)ₘSO₂F wherein m is an integer between 1 and 10, preferably between 1 and 6, more preferably between 2 and 4, even more preferably m equals 2;
- CF₂=CF-(OCF₂CF(R_{F1}))_{w}-O-CF₂(CF(R_{F2}))_{y}SO₂F wherein w is an integer between 0 and 2, R_{F1} and R_{F2}, equal or different from each other, are independently F, Cl or a C₁-C₁₀ fluoroalkyl group, optionally substituted with one or more ether oxygens, y is an integer between 0 and 6; preferably w is 1, R_{F1} is -CF₃, y is 1 and R_{F2} is F;
- CF₂=CF-Ar-SO₂F wherein Ar is a C₅-C₁₅ aromatic or heteroaromatic substituent;
preferably, said monomer (a2) is CF₂=CF-O-(CF₂)ₘ-SO₂F, wherein m is an integer between 1 and 6, preferably between 2 and 4, more preferably, said monomer (a2) is CF₂=CFOCF₂CF₂-SO₂F; and
ii. the at least one monomer (a1) is selected from the group comprising:
- C₂-C₈ fluoroolefins, such as tetrafluoroethylene, pentafluoropropylene, hexafluoropropylene, hexafluoroisobutylene and vinylidene fluoride;
- C₂-C₈ chloro- and/or bromo- and/or iodo-fluoroolefins, such as chlorotrifluoroethylene and bromotrifluoroethylene;
- fluoroalkylvinylethers of formula CF₂=CFOR_{f1}, wherein R_{f1} is a C₁-C₆ fluoroalkyl, e.g. -CF₃, -C₂F₅, -C₃F₇;
- fluoro-oxyalkylvinylethers of formula CF₂=CFOR_{O1}, wherein R_{O1} is a C₁-C₁₂ fluoro-oxyalkyl having one or more ether groups, for example perfluoro-2-propoxy-propyl;
- fluoroalkyl-methoxy-vinylethers of formula CF₂=CFOCF₂OR_{f2} in which R_{f2} is a C₁-C₆ fluoroalkyl, e.g. -CF₃, -C₂F₅, -C₃F₇ or a C₁-C₆ fluorooxyalkyl having one or more ether groups, like -C₂F₅-O-CF₃;
- fluorodioxoles, of formula (I): 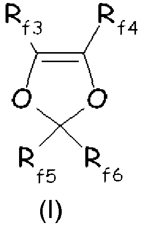 wherein each of R_{f3}, R_{f4}, R_{f5}, R_{f6}, equal to or different from each other, is independently a fluorine atom, a C₁-C₆ fluoro(halo)fluoroalkyl, optionally comprising one or more oxygen atom, e.g. -CF₃, -C₂F₅, -C₃F₇, -OCF₃, -OCF₂CF₂OCF₃; preferably, said monomer (a1) is selected from the group comprising: C₃-C₈ fluoroolefins, more preferably tetrafluoroethylene and/or hexafluoropropylene; chloro- and/or bromo- and/or iodo-C₂-C₆ fluoroolefins, like chlorotrifluoroethylene and/or bromotrifluoroethylene; fluoroalkylvinylethers of formula CF₂=CFOR_{f1} in which R_{f1} is a C₁-C₆ fluoroalkyl, e.g. -CF₃, -C₂F₅, -C₃F₇; fluoro-oxyalkylvinylethers of formula CF₂=CFOR_{O1}, in which R_{O1} is a C₁-C₁₂ fluorooxyalkyl having one or more ether groups, like perfluoro-2-propoxy-propyl; and more preferably said monomer (a1) is tetrafluoroethylene (TFE).

7. The solid composition according to any of the preceding claims, wherein fluoropolymer (b) is selected from the group consisting of polytetrafluoroethylene (PTFE), a perfluoroalkoxy (PFA) polymer and a fluorinated ionomer precursor bearing a -SO₂F group.

8. The solid composition according to claim 7, wherein fluoropolymer (b) is a perfluoroalkoxy (PFA) melt-processable copolymer comprising recurring units derived from at least one of perfluoromethylvinyl ether, perfluoropropyl vinyl ether and recurring units derived from tetrafluoroethylene, and mixtures thereof.

9. A method for the preparation of a composition according to any of the preceding claims, comprising the steps of:
i. preparing a plurality of particle cores (A) comprising fluoropolymer (a);
ii. contacting the particle cores (A) of step i. with a suspension or dispersion of elementary particles (B) having a weight average particle size (D50) from 1 to 1000 nm, comprising a high crystallinity fluoropolymer (b), in a liquid medium to obtain a biphasic system;
iii. removing the liquid medium from the biphasic system of step ii.

10. The method according to claim 9 wherein the liquid medium is water.

11. The method according to claim 9 or 10 wherein in step iii. the liquid medium is removed by drying at a temperature from 30 to 80°C, preferably from 50 to 70°C.

12. A process for the preparation of an article comprising a composition obtained via melt extrusion of the solid composition of claims 1-8.

13. An article obtainable via the process of claim 12.

14. The article of claim 13 in the form of a film or of a tube.

## Patentansprüche

1. Feste Zusammensetzung in der Form einer Vielzahl von Verbundpartikeln, wobei jedes Verbundpartikel einen Kern (A) umfasst, der wenigstens teilweise mit leichten Partikeln (B) überzogen ist, die eine gewichtsgemittelte Partikelgröße (D50) aufweisen, die wenigstens 10-mal kleiner als die D50 des Kerns (A) ist, wobei:
- der Kern (A) ein niederkristallines Fluorpolymer (Fluorpolymer (a)) umfasst, das eine Schmelzwärme von nicht höher als 4 J/g aufweist, und
- die leichten Partikel (B) eine D50 von 1 bis 1000 nm aufweisen, wie bestimmt durch Photonenkorrelationsspektroskopie unter Verwendung des Verfahrens von ISO 13321:1996, und ein hochkristallines Fluorpolymer (Fluorpolymer (b)) umfassen, das eine Schmelzwärme von höher als 10 J/g aufweist,
wobei die Schmelzwärmewerte durch DCS nach dem Verfahren von ASTM D3418-08 bestimmt sind,
wobei die Zusammensetzung **dadurch gekennzeichnet ist, dass** das Gewichtsverhältnis von Fluorpolymer (a) zu Fluorpolymer (b) von 96:4 bis 99,99:0,01 beträgt.

2. Feste Zusammensetzung gemäß Anspruch 1, wobei das Gewichtsverhältnis von Fluorpolymer (a) zu Fluorpolymer (b) von 98:2 bis 99,99:0,01 beträgt, vorzugsweise von 99:1 bis 99,98:0,02, höchst bevorzugt von 99,2:0,8 bis 99,95:0,05.

3. Feste Zusammensetzung gemäß Anspruch 1 oder 2, wobei die mittlere Größe des Verbundpartikels, das einen Kern (A) umfasst, der teilweise mit leichten Partikeln (B) überzogen ist, bestimmt durch Siebanalyse gemäß dem Verfahren von ASTM D1921-12, wenigstens 400 Mikrometer, vorzugsweise 700 Mikrometer, bevorzugter wenigstens 1000 Mikrometer, wenigstens 1200 µm oder wenigstens 1500 µm, und/oder nicht mehr als 5000 Mikrometer, bevorzugter nicht mehr als 3000 Mikrometer, beträgt.

4. Feste Zusammensetzung gemäß einem der vorstehenden Ansprüche, wobei die leichten Partikel (B), die das Fluorpolymer (b) umfassen, eine gewichtsgemittelte Größe (D50) von 1 bis 700 nm aufweisen, vorzugsweise von 10 bis 500 nm, bevorzugter von 100 bis 200 nm.

5. Feste Zusammensetzung gemäß einem der vorstehenden Ansprüche, wobei das Fluorpolymer (a) ausgewählt ist aus der Gruppe bestehend aus: einem fluorierten Ionomer in der SO₂F-Form, einem Copolymer umfassend Wiederholungseinheiten abgeleitet von Tetrafluorethylen, von Perfluormethylvinylether und von einem oder mehreren fluorierten Dioxolen der Formel (I): 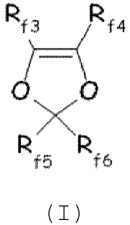 wobei jedes von R_{f3}, R_{f4}, R_{f5}, R_{f6}, gleich oder voneinander verschieden, unabhängig ein Fluoratom, ein C₁-C₆-Fluor(halogen)fluoralkyl, gegebenenfalls umfassend ein oder mehrere Sauerstoffatome, z. B. -CF₃, -C₂F₅, - C₃F₇, -OCF₃, -OCF₂CF₂OCF₃, ein Copolymer von Vinylidendifluorid (VDF) und Chlortrifluorethylen (CTFE) oder Copolymer von VDF und Trifluorethylen (TFE) oder Gemische davon ist.

6. Feste Zusammensetzung gemäß Anspruch 5, wobei das Fluorpolymer (a) ausgewählt ist aus der Gruppe bestehend aus: einen fluorierten Ionomer-Vorläufer in der SO₂F-Form, umfassend
- Wiederholungseinheiten abgeleitet von wenigstens einem ethylenisch ungesättigten Monomer, das wenigstens ein Fluoratom umfasst (fluoriertes Monomer (a1)); und
- eine wesentliche Menge an Wiederholungseinheiten abgeleitet von wenigstens einem ethylenisch ungesättigten Monomer, das wenigstens eine Ionenaustauschgruppe umfasst (nachstehend funktionelles Monomer (a2)), wobei:
i. das wenigstens eine fluorierte funktionelle Monomer (a2) ausgewählt ist aus der Gruppe bestehend aus
- CF₂=CF(CF₂)ₚSO₂F, wobei p eine ganze Zahl zwischen 0 und 10 ist, vorzugsweise zwischen 1 und 6, wobei bevorzugter p gleich 2 oder 3 ist;
- CF₂=CF-O-(CF₂)ₘSO₂F, wobei m eine ganze Zahl zwischen 1 und 10 ist, vorzugsweise zwischen 1 und 6, bevorzugter zwischen 2 und 4, wobei noch bevorzugter m gleich 2 ist;
- CF₂=CF-(OCF₂CF(R_{F1}))_{w}-O-CF₂(CF(R_{F2}))_{y}SO₂F, wobei w eine ganze Zahl zwischen 0 und 2 ist, R_{F1} und R_{F2}, gleich oder voneinander verschieden, unabhängig F, Cl oder eine C₁-C₁₀-Fluoralkylgruppe, gegebenenfalls mit einem oder mehreren Ethersauerstoffen, ist, y eine ganze Zahl zwischen 0 und 6 ist; wobei vorzugsweise w 1 ist, R_{F1}
- CF₃ ist, y 1 ist und R_{F2} F ist;
- CF₂=CF-Ar-SO₂F, wobei Ar ein aromatischer oder heteroaromatischer C₅-C₁₅-Substituent ist;
wobei das Monomer (a2) vorzugsweise CF₂=CF-O-(CF₂)ₘ-SO₂F ist, wobei m eine ganze Zahl zwischen 1 und 6 ist, vorzugsweise zwischen 2 und 4, wobei das Monomer (a2) bevorzugter CF₂=CFOCF₂CF₂-SO₂F ist; und
ii. das wenigstens eine Monomer (a1) ausgewählt ist aus der Gruppe umfassend:
- C₂-C₈-Fluorolefine, wie z. B. Tetrafluorethylen, Pentafluorpropylen, Hexafluorpropylen, Hexafluorisobutylen und Vinylidenfluorid;
- C₂-C₈-Chlor- und/oder Brom- und/oder Iodfluorolefine, wie z. B. Chlortrifluorethylen und Bromtrifluorethylen;
- Fluoralkylvinylether der Formel CF₂=CFOR_{f1}, wobei R_{f1} ein C₁-C₆-Fluoralkyl ist, z. B. -CF₃, -C₂F₅, -C₃F₇;
- Fluoroxyalkylvinylether der Formel CF₂=CFOR_{O1}, wobei R_{O1} ein C₁-C₁₂-Fluoroxyalkyl mit einer oder mehreren Ethergruppen ist, beispielsweise Perfluor-2-propoxypropyl;
- Fluoralkylmethoxyvinylether der Formel CF₂=CFOCF₂OR_{f2}, wobei R_{f2} ein C₁-C₆-Fluoralkyl ist, z. B. -CF₃, -C₂F₅, -C₃F₇, oder ein C₁-C₆-Fluoroxyalkyl mit einer oder mehreren Ethergruppen, wie z. B. -C₂F₅-O-CF₃;
- Fluordioxole der Formel (I): 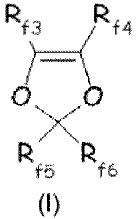 wobei jedes von R_{f3}, R_{f4}, R_{f5}, R_{f6}, gleich oder voneinander verschieden, unabhängig ein Fluoratom, ein C₁-C₆-Fluor(halogen)fluoralkyl, gegebenenfalls umfassend ein oder mehrere Sauerstoffatome, z. B. -CF₃, -C₂F₅, - C₃F₇,
- OCF₃, -OCF₂CF₂OCF₃ ist;
wobei das Monomer (a1) vorzugsweise ausgewählt ist aus der Gruppe umfassend: C₃-C₈-Fluorolefine, bevorzugter Tetrafluorethylen und/oder Hexafluorpropylen; Chlor- und/oder Brom- und/oder Iod-C₂-C₆-fluorolefine, beispielsweise Chlortrifluorethylen und/oder Bromtrifluorethylen; Fluoralkylvinylether der Formel CF₂=CFOR_{f1}, wobei R_{f1} ein C₁-C₆-Fluoralkyl ist, z. B. -CF₃, -C₂F₅, -C₃F₇; Fluoroxyalkylvinylether der Formel CF₂=CFOR_{O1}, wobei R_{O1} ein C₁-C₁₂-Fluoroxyalkyl mit einer oder mehreren Ethergruppen ist, beispielsweise Perfluor-2-propoxypropyl; und bevorzugter das Monomer (a1) Tetrafluorethylen (TFE) ist.

7. Feste Zusammensetzung gemäß einem der vorstehenden Ansprüche, wobei das Fluorpolymer (b) ausgewählt ist aus der Gruppe bestehend aus Polytetrafluorethylen (PTFE), einem Perfluoralkoxy(PFA)-Polymer und einem fluorierten Ionomervorläufer, der eine -SO₂F-Gruppe trägt.

8. Feste Zusammensetzung gemäß Anspruch 7, wobei das Fluorpolymer (b) ein schmelzverarbeitbares Perfluoralkoxy(PFA)-Copolymer ist, das Wiederholungseinheiten umfasst, die von wenigstens einem Perfluormethylvinylether, Perfluorpropylvinylether abgeleitet sind, und Wiederholungseinheiten, die von Tetrafluorethylen abgeleitet sind, und Gemische davon.

9. Verfahren zur Herstellung einer Zusammensetzung gemäß einem der vorstehenden Ansprüche, umfassend die Schritte:
i. Herstellen einer Vielzahl von Partikelkernen (A), die ein Fluorpolymer (a) umfassen;
ii. Inkontaktbringen der Partikelkerne (A) von Schritt i. mit einer Suspension oder Dispersion von leichten Partikeln (B), die eine gewichtsgemittelte Partikelgröße (D50) von 1 bis 1000 nm aufweisen, ein hochkristallines Fluorpolymer (b) umfassen, in einem flüssigen Medium, um ein zweiphasiges System zu erhalten;
iii. Entfernen des flüssigen Mediums aus dem zweiphasigen System von Schritt ii.

10. Verfahren gemäß Anspruch 9, wobei das flüssige Medium Wasser ist.

11. Verfahren gemäß Anspruch 9 oder 10, wobei bei Schritt iii. das flüssige Medium durch Trocknen bei einer Temperatur von 30 bis 80 °C, vorzugsweise von 50 bis 70 °C, entfernt wird.

12. Verfahren zur Herstellung eines Gegenstands, der eine Zusammensetzung umfasst, die durch Schmelzextrusion der festen Zusammensetzung gemäß Ansprüchen 1-8 erhalten ist.

13. Gegenstand, erhältlich durch das Verfahren gemäß Anspruch 12.

14. Gegenstand gemäß Anspruch 13 in der Form eines Films oder eines Rohrs.

## Revendications

1. Composition solide sous forme d'une pluralité de particules composites, chaque particule composite comprenant un noyau (A) qui est au moins partiellement revêtu avec des particules élémentaires (B) possédant une grosseur de particule moyenne en poids (D50) au moins 10 fois plus petite que le D50 du noyau (A) :
- le noyau (A) comprenant un fluoropolymère à faible cristallinité (fluoropolymère (a)), possédant une chaleur de fusion non supérieure à 4 J/g, et
- les particules élémentaires (B) possédant un D50 de 1 à 1 000 nm tel que déterminé via spectroscopie à corrélation de photons à l'aide du procédé de la norme ISO 13321:1996, et comprenant un fluoropolymère à haute cristallinité (fluoropolymère (b)), possédant une chaleur de fusion supérieure à 10 J/g, lesdites valeurs de chaleur de fusion étant déterminées par DSC suivant la procédure de la norme ASTM D3418-08,
ladite composition étant **caractérisée en ce que** le rapport en poids de fluoropolymère (a) sur le fluoropolymère (b) est de 96:4 à 99,99:0,01.

2. Composition solide selon la revendication 1, le rapport en poids de fluoropolymère (a) sur le fluoropolymère (b) étant de 98:2 à 99,99:0,01, préférablement de 99:1 à 99,98:0,02, le plus préférablement de 99,2:0,8 à 99,95:0,05.

3. Composition solide selon la revendication 1 ou 2, la grosseur moyenne de la particule composite comprenant un noyau (A) partiellement revêtu avec des particules élémentaires (B) déterminée par analyse de tamisage selon le procédé de la norme ASTM D1921-12 étant d'au moins 400 micromètres, préférablement 700 micromètres, plus préférablement d'au moins 1 000 micromètres, d'au moins 1 200 µm ou d'au moins 1 500 µm et/ou non supérieure à 5 000 micromètres, plus préférablement non supérieure à 3 000 micromètres.

4. Composition solide selon l'une quelconque des revendications précédentes, les particules élémentaires (B) comprenant le fluoropolymère (b) possédant une grosseur moyenne en poids (D50) de 1 à 700 nm, préférablement de 10 à 500 nm, plus préférablement de 100 à 200 nm.

5. Composition solide selon l'une quelconque des revendications précédentes, le fluoropolymère (a) étant choisi dans le groupe constitué par : un ionomère fluoré sous la forme SO₂F, un copolymère comprenant des motifs répétitifs issus du tétrafluoroéthylène, d'un perfluorométhylvinyléther et d'un ou plusieurs dioxoles fluorés de formule (I) : 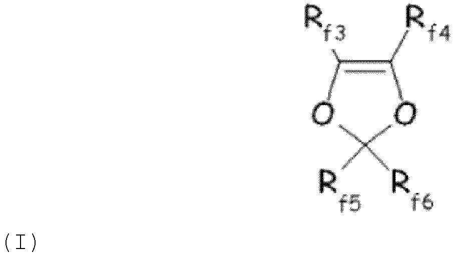 chacun parmi R_{f3}, R_{f4}, R_{f5}, R_{f6}, identiques ou différents les uns des autres, étant indépendamment un atome de fluor, un C₁₋₆-fluoro(halogéno)fluoroalkyle, éventuellement comprenant un ou plusieurs atomes d'oxygène, par ex. -CF₃, -C₂F₅, -C₃F₇, OCF₃, -OCF₂CF₂OCF₃, un copolymère de difluorure de vinylidène (VDF) et de chlorotrifluoroéthylène (CTFE), ou des copolymères de VDF et de trifluoroéthylène (TFE), et des mélanges correspondants.

6. Composition solide selon la revendication 5, le fluoropolymère (a) étant choisi dans le groupe constitué par : un précurseur d'ionomère fluoré sous la forme SO₂F comprenant
- des motifs répétitifs issus d'au moins un monomère éthyléniquement insaturé comprenant au moins un atome de fluor (monomère fluoré (a1) ; et
- une quantité substantielle de motifs répétitifs issus d'au moins un monomère éthyléniquement insaturé comprenant au moins un groupe d'échange d'ions (monomère fonctionnel (a2), ci-après) :
i. l'au moins un monomère fonctionnel fluoré (a2) étant choisi dans le groupe constitué par
- CF₂=CF(CF₂)ₚSO₂F, p étant un entier compris entre 0 et 10, préférablement entre 1 et 6, plus préférablement p étant égal à 2 ou 3 ;
- CF₂=CF-O-(CF₂)ₘSO₂F, m étant un entier compris entre 1 et 10, préférablement entre 1 et 6, plus préférablement entre 2 et 4, encore plus préférablement m étant égal à 2 ;
- CF₂=CF-(OCF₂CF(R_{F1}))_{w}-O-CF₂(CF(R_{F2}))_{y}SO₂F, w étant un entier compris entre 0 et 2, R_{F1} et R_{F2}, identiques ou différents l'un de l'autre, étant indépendamment F, Cl ou un groupe C₁₋₁₀-fluoroalkyle, éventuellement substitué par un ou plusieurs oxygènes d'éther, y étant un entier compris entre 0 et 6 ; préférablement w étant 1, R_{F1} étant -CF₃, y étant 1 et R_{F2} étant F ;
- CF₂=CF-Ar-SO₂F, Ar étant un substituant aromatique ou hétéroaromatique en C₅₋₁₅;
préférablement, ledit monomère (a2) étant CF₂=CF-O-(CF₂)ₘSO₂F, m étant un entier compris entre 1 et 6, préférablement entre 2 et 4, plus préférablement, ledit monomère (a2) étant CF₂=CFOCF₂CF₂-SO₂F; et
ii. l'au moins un monomère (a1) étant choisi dans le groupe comprenant :
- des C₂₋₈-fluorooléfines, telles que le tétrafluoroéthylène, le pentafluoropropylène, l'hexafluoropropylène, l'hexafluoroisobutylène et le fluorure de vinylidène ;
- des C₂₋₈-chloro- et/ou bromo- et/ou iodo-fluorooléfines, telles que le chlorotrifluoroéthylène et le bromotrifluoroéthylène ;
- des fluoroalkylvinyléthers de formule CF₂=CFOR_{f1}, R_{f1} étant un C₁₋₆-fluoroalkyle, par ex. -CF₃, - C₂F₅, -C₃F₇;
- des fluoro-oxyalkylvinyléthers de formule CF₂=CFOR_{O1}, R_{O1} étant un C₁₋₁₂-fluoro-oxyalkyle possédant un ou plusieurs groupes éther, par exemple perfluoro-2-propoxy-propyle ;
- des fluoroalkyl-méthoxy-vinyléthers de formule CF₂=CFOCF₂OR_{f2} dans lesquels R_{f2} est un C₁₋₆-fluoroalkyle, par ex. -CF₃, -C₂F₅, -C₃F₇ ou un C₁₋₆-fluorooxyalkyle possédant un ou plusieurs groupes éther, comme -C₂F₅-O-CF₃;
- des fluorodioxoles, de formule (I) : 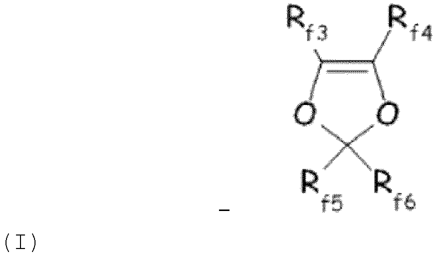 chacun parmi R_{f3}, R_{f4}, R_{f5}, R_{f6}, identiques ou différents les uns des autres, étant indépendamment un atome de fluor, un C₁₋₆-fluoro(halogéno)fluoroalkyle, éventuellement comprenant un ou plusieurs atomes d'oxygène, par ex. -CF₃, -C₂F₅, -C₃F₇, OCF₃, -OCF₂CF₂OCF₃; préférablement, ledit monomère (a1) étant choisi dans le groupe comprenant : des C₃₋₈-fluorooléfines, plus préférablement le tétrafluoroéthylène et/ou l'hexafluoropropylène ; des C₂₋₆-chloro- et/ou bromo- et/ou iodo-fluorooléfines, telles que le chlorotrifluoroéthylène et/ou le bromotrifluoroéthylène ; des fluoroalkylvinyléthers de formule CF₂=CFOR_{f1} dans laquelle R_{f1} est un C₁₋₆-fluoroalkyle, par ex. - CF₃, -C₂F₅, -C₃F₇; des fluoro-oxyalkylvinyléthers de formule CF₂=CFOR_{O1}, dans laquelle R_{O1} est un C₁₋₁₂-fluoro-oxyalkyle possédant un ou plusieurs groupes éther, comme perfluoro-2-propoxy-propyle ; et plus préférablement ledit monomère (a1) étant le tétrafluoroéthylène (TFE).

7. Composition solide selon l'une quelconque des revendications précédentes, le fluoropolymère (b) étant choisi dans le groupe constitué par le polytétrafluoroéthylène (PTFE), un polymère de type perfluoroalcoxy (PFA) et un précurseur d'ionomère fluoré portant un groupe -SO₂F.

8. Composition solide selon la revendication 7, le fluoropolymère (b) étant un copolymère pouvant être traité par fusion de perfluoroalcoxy (PFA) comprenant des motifs répétitifs issus d'au moins l'un parmi un perfluorométhylvinyléther, un perfluoropropylvinyléther et des motifs répétitifs issus du tétrafluoroéthylène, et des mélanges correspondants.

9. Procédé pour la préparation d'une composition selon l'une quelconque des revendications précédentes, comprenant les étapes de :
i. préparation d'une pluralité de noyaux (A) de particule comprenant un fluoropolymère (a) ;
ii. mise en contact des noyaux (A) de particule de l'étape i. avec une suspension ou une dispersion de particules élémentaires (B) possédant une grosseur de particule moyenne en poids (D50) de 1 à 1 000 nm, comprenant un fluoropolymère (b) à haute cristallinité, dans un milieu liquide pour obtenir un système biphasique ;
iii. élimination du milieu liquide du système biphasique de l'étape ii.

10. Procédé selon la revendication 9, le milieu liquide étant de l'eau.

11. Procédé selon la revendication 9 ou 10 dans lequel dans l'étape iii. le milieu liquide est éliminé par séchage à une température de 30 à 80 °C, préférablement de 50 à 70 °C.

12. Procédé pour la préparation d'un article comprenant une composition obtenu via extrusion à l'état fondu de la composition solide selon les revendications 1 à 8.

13. Article pouvant être obtenu via le procédé selon la revendication 12.

14. Article selon la revendication 13 sous forme d'un film ou d'un tube.
